# EUROPÄISCHE PATENTSCHRIFT

(11) **EP 1 363 727 B1**
(45) Veröffentlichungstag und Bekanntmachung des Hinweises auf die Patenterteilung: **15.09.2004**
(21) Anmeldenummer: 02712870.1
(22) Anmeldetag: 30.01.2002
(51) Int. Cl.: B01J 8/00, C08F 10/00, C08F 2/01

(54) **VERFAHREN ZUM DOSIEREN VON KATALYSATOREN**
METHOD FOR DOSING CATALYSTS
PROCEDE DE DOSAGE DE CATALYSEURS

(30) Priorität: 02.02.2001 DE 10105276
(43) Veröffentlichungstag der Anmeldung: 26.11.2003
(73) Patentinhaber: Basell Polyolefine GmbH, 50389 Wesseling (DE)
(72) Erfinder: GEBHART, Hermann, 67459 Böhl-Iggelheim (DE); DOLLE, Volker, 64625 Bensheim (DE); SANCHEZ, Angel, 43300 Mont-Roig ,Tarragona (ES); PLÖTZ, Herbert, 67105 Schifferstadt (DE); GÖTZ, Peter, 67459 Böhl-Iggelheim (DE); LANGHAUSER, Franz, 67152 Ruppertsberg (DE); MAYER, Klaus-Peter DI, deceased (DE)
(86) Internationale Anmeldenummer: PCT/EP2002/000919
(87) Internationale Veröffentlichungsnummer: WO 2002/062462

(56) Entgegenhaltungen:
- EP-A- 0 466 354
- GB-A- 896 786
- US-A- 4 610 574
- US-A- 5 403 556
- PATENT ABSTRACTS OF JAPAN vol. 007, no. 171 (C-178), 28. Juli 1983 (1983-07-28) & JP 58 079533 A (MITSUI SEKIYU KAGAKU KOGYO KK), 13. Mai 1983 (1983-05-13)

## Beschreibung

Die vorliegende Erfindung betrifft ein Verfahren zur Dosierung von Katalysatoren in einen Reaktor, wobei man zunächst den Katalysator in einem Vorlagebehälter in einem Kohlenwasserstoff suspendiert, die erhaltene Suspension durch Rühren in Bewegung hält und diese dann über ein Dreiwegedosierventil und einen Ejektor in den eigentlichen Reaktor einspeist, dadurch gekennzeichnet, dass man zuerst die den Katalysator enthaltende Suspension mit Hilfe einer Pumpe aus dem Vorlagebehälter austrägt und dadurch kontinuierlich umwälzt, dass man die Suspension über das Dreiwegedosierventil innerhalb eines geschlossenen Leitungssystems in den Vorlagebehälter zurückführt, anschließend innerhalb des Vorlagebehälters einen Druck einstellt, der 0,1 bis 30 bar höher liegt als der Druck im Reaktor und danach durch einen pulsierenden Betrieb des nunmehr geöffneten Dreiwegedosierventils die Suspension über ein Durchflußmeßgerät, welches das Dreiwegedosierventil steuert und einen nachgeschalteten Ejektor in den Reaktor kontinuierlich einbringt.

Weiterhin betrifft die vorliegende Erfindung eine Vorrichtung zur Dosierung von Katalysatoren, die u.a. für die Polymerisation von C₂-C₂₀-Olefinen geeignet ist.

Polymerisate von C₂-C₂₀-Olefinen können sowohl durch Flüssigphasenpolymerisation, als auch durch Polymerisation im Monomeren (Massepolymerisation), in einer Aufschlämmung oder aus der Gasphase heraus hergestellt werden. Die Polymerisation wird dabei meistens mit Hilfe eines Ziegler-Natta-Katalysators durchgeführt, welches üblicherweise aus einer titanhaltigen Feststoffkomponente, einer organischen Aluminiumverbindung und einer organischen Silanverbindung besteht (EP-B 45 977, EP-A 171 200, US-A 4 857 613, US-A 5 288 824). Daneben können Polymerisate von C₂-C₂₀-Olefinen aber auch durch Polymerisation mit Hilfe von Metallocenverbindungen oder von polymerisationsaktiven Metallkomplexen gewonnen werden. Dabei ist es wichtig, den verwendeten Katalysator in einer möglichst effizienten Weise in den Polymerisationsreaktor einzudosieren.

Die bekannten Techniken zur Dosierung von feinteiligen Katalysatoren zur Herstellung von Polyolefinen sind überwiegend bereits seit Jahrzehnten etabliert. Zum erheblichen Teil tragen diese Techniken nicht der laufenden Entwicklung der Katalysatoren Rechnung. So erfordern moderne Hochleistungskatalysatoren schon bei kleinen Mengen eine besondere Homogenität in der Dosierung. Mit der Entwicklung der Metallocen-Katalysatoren ist es zusätzlich erforderlich, vollständig oder teilweise aktive Katalysatoren sicher und störungsfrei in den Prozeß zu bringen.

Gängige und etablierte Techniken zur Katalysatordosierung basieren überwiegend auf einem Portionierorgan, das ein bestimmtes Volumenelement über eine geeignete Förderung in den Reaktor dosiert.

Beispielhaft zu erwähnen sind hierbei die in der EP-A 0 025 137 bzw. in der US-A 4,690,804 beschriebenen Methoden, über einen Dimple- bzw. double-check-feeder eine sedimentierte Suspension des Katalysators portionsweise aus einem Vorratsgefäß zu entnehmen und durch Drehung um 180°C einem Förderstrom zuzuführen, der die Suspension in der Reaktor fördert. Der Nachteil dieser Methode ist das fixe Volumen des Feeders. Dies hat zur Folge, dass bei niedrigen Ausstößen bzw. hoher Katalysatorproduktivität die Anzahl der Dosierungen pro Stunde sehr niedrig ist und damit der Prozeß empfindlich gestört werden kann. Bei Katalysatoren mit hoher Aktivität besteht zudem die Gefahr, dass der Katalysator nicht ausreichend schnell homogen im Reaktor verteilt wird, was bei hohen Katalysatoraktivitäten schnell zur Brockenbildung führen kann. Ein weiterer Nachteil der Dosierung einer sedimentierten Katalysatorsuspension ist, dass mit abnehmendem Füllgrad des Dosierbehälters die Katalysatorkonzentration abnimmt und damit die Einstellung des Portionierorgans permanent angepasst werden muß.

Ein weiteres Beispiel für eine Dosierung ist die unter anderem in der DE-A 22 57 669 beschriebene Methode. Hier wird der Katalysator mit Stickstoff in den Reaktor getrieben. Dieses Verfahren hat aber den Nachteil, dass substantielle Mengen Stickstoff in den Reaktor gelangen, die den Partialdruck der Monomere absenken und damit die Aktivität sowie die Effizienz des Katalysatorsystems negativ beeinflussen können.

Eine weitere Möglichkeit besteht darin, den Katalysator über ein Schleusensystem wie in der US-A 3,827,830 oder der US-A 4,123,601 beschrieben, in den Reaktor zu dosieren. Die Erfahrung hat aber gezeigt, dass solche Schleusensysteme beispielsweise mit Kugelhähnen in Verbindung mit anorganischen Materialien nur sehr schwer über längere Zeit sicher zu betreiben sind. Typische Abnutzungserscheinungen sind u.a. Undichtigkeiten und blockierende Hähne. Dies ist mit erhöhtem Wartungsaufwand und hohen Kosten verbunden. Auch diese Dosierungen erfolgen portionsweise mit den oben aufgeführten Nachteilen.

In der DE-A 30 26 816 ist die Dosierung einer Katalysatorsuspension von einer Vorratszone in eine Mischzone über ein Ventil beschrieben. Konstruktionen dieser Art neigen, insbesondere bei längeren Öffnungszeiten des Ventils zum Verstopfen. Damit ist eine kontrollierte Dosierung definierter Mengen nicht dauerhaft möglich. Für die Dosierung bereits aktivierter oder teilaktivierter Katalysatoren ist eine Mischzone, wie in dieser Anmeldung beschrieben, nicht geeignet, da hier häufig Belagsbildung auftritt.

Der vorliegenden Erfindung lag daher die Aufgabe zugrunde, den geschilderten Nachteilen abzuhelfen und ein neues Verfahren zur Dosierung von Katalysatoren in einen Reaktor zu entwickeln, mit welchem der eingesetzte Katalysator kontinuierlich und möglichst homogen in den Reaktor eingebracht werden kann, wobei die Dosierung des Katalysators in der Weise erfolgen sollte, dass möglichst wenig Verunreinigungen in den Reaktor mitgeschleppt werden, und dass die eindosierte Katalysatormenge messbar sein sollte. Weiterhin sollte das erfindungsgemäße Verfahren mit Hilfe eines Dosiersystems durchgeführt werden, welches weitgehend frei sein sollte von bewegten Teilen mit großen Dichtflächen, da erfahrungssgemäß an solchen Stellen ein starker Verschleiß auftritt, der die Betriebssicherheit und Betriebsdauer negativ beeinflußt.

Demgemäß wurde ein neues, deutlich verbessertes Verfahren zur Dosierung von Katalysatoren in einen Reaktor gefunden, wobei man zunächst den Katalysator in einem Vorlagebehälter in einem Kohlenwasserstoff suspendiert, die erhaltene Suspension durch Rühren in Bewegung hält und diese dann über ein Dreiwegedosierventil und einen Ejektor in den eigentlichen Reaktor einspeist, dadurch gekennzeichnet, dass man zuerst die den Katalysator enthaltende Suspension mit Hilfe einer Pumpe aus dem Vorlagebehälter austrägt und dadurch kontinuierlich umwälzt, dass man die Suspension über das Dreiwegedosierventil innerhalb eines geschlossenen Leitungssystems in den Vorlagebehälter zurückführt, anschließend innerhalb des Vorlagebehälters einen Druck einstellt, der 0,1 bis 30 bar höher liegt als der Druck im Reaktor und danach durch einen pulsierenden Betrieb des nunmehr geöffneten Dreiwegedosierventils die Suspension über ein Durchflußmeßgerät, welches das Dreiwegedosierventil steuert und einen nachgeschalteten Ejektor in den Reaktor kontinuierlich einbringt.

Das erfindungsgemäße Verfahren wird dabei vorzugsweise zur Dosierung von Katalysatoren zur Polymerisation von C₂-C₂₀-Olefinen eingesetzt. Als C₂-C₂₀-Olefine können insbesondere aliphatische C₂-C₂₀-Alk-1-ene, besonders bevorzugt C₂-C₁₀-Alk-1-ene wie Ethylen, Propylen, But-1-en, Pent-1-en, Hex-1-en, Hept-1-en oder Oct-1-en verwendet werden, wobei Ethylen, Propylen oder But-1-en bevorzugt eingesetzt werden. Weiterhin sollen unter der Bezeichnung C₂-C₂₀-Olefine insbesondere auch interne C₄-C₂₀-Olefine wie beispielsweise But-2-en oder Isopren, C₄-C₂₀-Diene wie beispielsweise 1,4-Butadien, 1,5-Hexadien, 1,9-Decadien, 5-Ethyliden-2-norbornen, 5-Methyliden-2-norbornen, weiterhin cyclische Olefine wie beispielsweise Norbornen oder α-Pinen oder aber Triene wie beispielsweise 1,6-Diphenyl- 1,3,5-hexatrien, 1,6-Di-tert.-butyl-1,3,5-hexatrien, 1,5,9-Cyclododecatrien,trans,trans-Farnesol, sowie mehrfach ungesättigte Fettsäuren oder Fettsäureester verstanden werden. Das Verfahren kommt zur Herstellung von Homopolymerisaten der C₂-C₂₀-Olefine oder von Copolymerisaten der C₂-C₂₀-Olefine, bevorzugt mit bis zu 30 Gew.-% einpolymerisierter anderer Olefine mit bis zu 20 C-Atomen, in Betracht. Unter Copolymerisaten sollen hierbei sowohl statistische Copolymerisate als auch die sogenannten Block- oder Impactcopolymerisate verstanden werden.

Besonders geeignet ist das erfindungsgemäße Verfahren zur Dosierung von Katalysatoren bei der Herstellung von Homopolymerisaten des Propylens oder von Copolymerisaten des Propylens mit bis zu 30 Gew.-% einpolymerisierter anderer Olefine mit bis zu 10 C-Atomen. Die Copolymerisate des Propylens sind hierbei statistische Copolymerisate oder Block- oder Impactcopolymerisate. Sofern die Copolymerisate des Propylens statistisch aufgebaut sind, enthalten sie im allgemeinen bis zu 15 Gew.-%, bevorzugt bis zu 6 Gew.-%, andere Olefine mit bis zu 10 C-Atomen, insbesondere Ethylen, But-1-en oder ein Gemisch aus Ethylen und But-1-en.

Die Block- oder Impactcopolymerisate des Propylens sind Polymerisate, bei denen man in der ersten Stufe ein Propylenhomopolymerisat oder ein statistischen Copolymerisat des Propylens mit bis zu 15 Gew.-%, bevorzugt bis zu 6 Gew.-%, anderer Olefine mit bis zu 10 C-Atomen herstellt und dann in der zweiten Stufe ein Propylen-Ethylen-Copolymerisat mit Ethylengehalten von 5 bis 99 Gew.-%, wobei das Propylen-Ethylen-Copolymerisat zusätzlich noch weitere C₄-C₁₀-Olefine enthalten kann, hinzupolymerisiert. In der Regel wird soviel des Propylen-Ethylen-Copolymerisats hinzupolymerisiert, dass das in der zweiten Stufe erzeugte Copolymerisat im Endprodukt einen Gehalt von 3 bis 90 Gew.-% aufweist.

Als einzusetzende Katalysatoren können u.a. Philipskatalysatoren auf der Basis von Chromverbindungen oder Zieglerkatalysatoren verwendet werden. Das erfindungsgemäße Verfahren eignet sich u.a. auch zur Dosierung von Ziegler-Natta-Katalysatorsystemen. Dabei werden insbesondere solche Katalysatorsysteme verwendet, die neben einer titanhaltigen Feststoffkomponente a) noch Cokatalysatoren in Form von organischen Aluminiumverbindungen b) und gegebenenfalls Elektronendonorverbindungen c) aufweisen.

Im erfindungsgemäßen Verfahren können aber auch als Katalysatoren Ziegler-Natta-Katalysatorsysteme auf der Basis von Metallocenverbindungen bzw. auf der Basis von polymerisationsaktiven Metallkomplexen eingesetzt werden.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält vorzugsweise mindestens eine halogenhaltige Magnesiumverbindung. Als Halogene werden hierbei Chlor, Brom, Jod oder Fluor verstanden, wobei Brom oder insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere Magnesiumdichlorid oder Magnesiumdibromid, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Bevorzugte Beispiele für halogenfreie Verbindungen des Magnesiums, die zur Herstellung der titanhaltige Feststoffkomponente a) geeignet sind, sind n-Butylethylmagnesium oder n-Butyloctylmagnesium. Bevorzugte Halogenierungsmittel sind Chlor oder Chlorwasserstoff. Es können jedoch auch die Titanhalogenide als Halogenierungsmittel dienen.

Darüber hinaus enthält die titanhaltige Feststoffkomponente a) zweckmäßigerweise Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II) 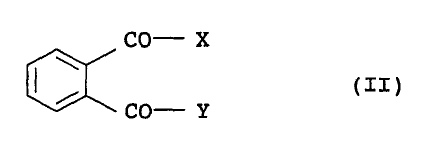 verwendet, wobei X und Y jeweils für ein Chlor- oder Bromatom oder einen C₁-C₁₀-Alkoxyrest oder gemeinsam für Sauerstoff in Anhydridfunktion stehen. Besonders bevorzugte Elektronendonorverbindungen sind Phthalsäureester, wobei X und Y einen C₁-C₈-Alkoxyrest bedeuten. Beispiele für vorzugsweise eingesetzte Phthalsäureester sind Diethylphthalat, Di-n-butylphthalat, Di-isobutylphthalat, Di-n-pentylphthalat, Di-n-hexylphthalat, Di-nheptylphthalat, Di-n-octylphthalat oder Di-2-ethylhexylphthalat.

Weiter bevorzugte Elektronendonorverbindungen innerhalb der titanhaltigen Feststoffkomponente sind aliphatische oder cycloaliphatische Diether oder aber Diester von 3- oder 4-gliedrigen, gegebenenfalls substituierten Cycloalkyl-1,2-dicarbonsäuren, sowie Monoester von substituierte Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise C₁-C₁₅-Alkanole oder C₅-C₇-Cycloalkanole, die ihrerseits eine oder mehrere C₁-C₁₀-Alkylgruppen tragen können, ferner C₆-C₁₀-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) anorganische Oxide als Träger enthalten. Es wird in der Regel ein feinteiliges anorganisches Oxid als Träger verwendet, welches einen mittleren Teilchendurchmesser von 5 bis 200 µm, bevorzugt von 10 bis 70 µm, aufweist. Unter dem mittleren Teilchendurchmesser ist hierbei der volumenbezogene Mittelwert (Medianwert) der durch Coulter-Counter-Analyse bestimmten Korngrößenverteilung zu verstehen.

Vorzugsweise sind die Körner des feinteiligen anorganischen Oxids aus Primärpartikeln zusammengesetzt, die einen mittleren Teilchendurchmesser der Primärpartikel von 1 bis 20 µm, insbesondere von 1 bis 5 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich, die Primärpartikeln vor ihrer Weiterverarbeitung zu sieben.

Weiterhin ist das bevorzugt zu verwendende anorganische Oxid auch dadurch charakterisiert, dass es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms, z.B. des Software-Pakets Analysis der Fa. SIS.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 cm³/g, bevorzugt von 1,0 bis 4,0 cm³/g, und eine spezifische Oberfläche von 10 bis 1000 m²/g, bevorzugt von 100 bis 500 m²/g, auf, wobei hier die durch Quecksilber-Porosimetrie nach DIN 66133 und durch Stickstoff-Adsorption nach DIN 66131 bestimmten Werte zu verstehen sind.

Es ist auch möglich ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, des Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie SiCl₄, Chlorsilane oder Aluminiumalkyle zum Einsatz kommen. Der Wassergehalt geeigneter anorganischer Oxide beträgt von 0 bis 6 Gew.-%. Vorzugsweise wird ein anorganische Oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, dass pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner C₁- bis C₈-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

R¹ ₙSi(OR²)₄₋ₙ (I)

wobei R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bezeichnet und n für die ganzen Zahlen 1, 2 oder 3 steht. Besonders bevorzugt werden solche Verbindungen, in denen R¹ eine C₁-C₈-Alkylgruppe oder eine 5- bis 7-gliedrige Cycloalkylgruppe sowie R² eine C₁-C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert.-butylsilan, Dimethoxyisobutyl-sek.-butylsilan und Dimethoxyisopropyl-sek.butylsilan hervorzuheben.

Bevorzugt werden die Cokatalysatoren b) und c) in einer solchen Menge eingesetzt, dass das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt und das Molverhältnis zwischen der Alüminiumverbindung b) und der Elektronendonorverbindung c) von 1:1 bis 250:1, insbesondere von 10:1 bis 80:1, beträgt.

Die titanhaltige Feststoffkomponente a), die Aluminiumverbindung b) und die in der Regel verwendete Elektronendonorverbindung c) bilden zusammen das Ziegler-Natta-Katalysatorsystem. Die Katalysatorbestandteile b) und c) können zusammen mit der titanhaltigen Feststoffkomponente a) oder als Gemisch oder auch in beliebiger Reihenfolge einzeln in den Reaktor eingebracht werden und dort der Aktivierung unterworfen werden.

Im erfindungsgemäßen Verfahren können auch Ziegler-Natta-Katalysatorsysteme auf Basis von Metallocenverbindungen bzw. auf der Basis von polymerisationsaktiven Metallkomplexen in den Reaktor dosiert werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz im erfindungsgemäßen Verfahren liegen die Metallocenkomplexe im Katalysatorsystem in der Regel geträgert vor. Als Träger werden häufig anorganische Oxide eingesetzt. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind.

Bevorzugte Metallocene enthalten Zentralatome, die über zwei π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren Cyclopentadienylgruppen zusätzlich durch cyclische Gruppen an zwei benachbarten C-Atomen substituiert sind.

Bevorzugte Metallocene sind auch solche, die nur eine Cyclopentadienylgruppe enthalten, die jedoch mit einen Rest substituiert ist, der auch an das Zentralatom gebunden ist.

Geeignete Metallocenverbindungen sind beispielsweise Ethylenbis(indenyl)-zirkoniumdichlorid, Ethylenbis(tetrahydroindenyl)-zirkoniumdichlorid, Diphenylmethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-2-methylindenyl)-zirkoniumdichlorid, Dimethylsilandiylbis(-2-methylbenzindenyl)-zirkoniumdichlorid Dimethylsilandiylbis(-2-methyl-4-phenylindenyl)zirkoniumdichlorid, Dimethylsilandiylbis(-2-methyl-4-naphthylindenyl)zirkoniumdichlorid, Dimethylsilandiylbis(-2-methyl-4-isopropylindenyl)zirkoniumdichlorid oder Dimethylsilandiylbis(-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Das erfindungsgemäße Verfahren kann zur Dosierung von solchen Katalysatoren verwendet werden, die gewöhnlich bei der Polymerisation von C₂-C₂₀-Olefinen eingesetzt werden. Die Polymerisation kann dabei in wenigstens einer, häufig auch in zwei oder noch mehr hintereinandergeschalteten Reaktionszonen (Reaktorkaskade) in der Gasphase, in der Flüssigphase, in der Slurryphase oder aber in der Bulkphase durchgeführt werden. Die Reaktionsbedingungen können bei der eigentlichen Polymerisation auch so eingestellt werden, dass die jeweiligen Monomere in zwei unterschiedlichen Phasen vorliegen, beispielsweise teils in flüssigem und teils in gasförmigen Zustand (condensed mode).

Es können die üblichen, für die Polymerisation von C₂-C₂₀-Olefinen verwendeten Reaktoren eingesetzt werden. Geeignete Reaktoren sind u.a. kontinuierlich betriebene horizontale oder vertikale Rührkessel, Umlaufreaktoren, Schleifenreaktoren, Stufenreaktoren oder Wirbelbettreaktoren oder aber Kombinationen der vorgenannten Reaktortechnologien. Die Größe der Reaktoren ist für das erfindungsgemäße Verfahren nicht von wesentlicher Bedeutung. Sie richtet sich nach dem Ausstoß, der in der oder in den einzelnen Reaktionszonen erzielt werden soll.

Das erfindungsgemäße Verfahren kann aber auch zur Dosierung von Katalysatoren in solchen Reaktoren verwendet werden, in denen keine Polymerisation, sondern eine organische oder eine anorganische Reaktion abläuft, beispielsweise eine Oxidations- oder eine Hydrierungsreaktion.

Als Reaktoren werden insbesondere Wirbelbettreaktoren sowie horizontal oder vertikal gerührte Pulverbettreaktoren verwendet. Das Reaktionsbett kann dabei aus dem Polymerisat aus C₂-C₂₀-Olefinen bestehen, das im jeweiligen Reaktor polymerisiert wird.

In einer besonders bevorzugten Ausführungsform des erfindungsgemäßen Verfahrens wird die Reaktion in einem Reaktor oder in einer Kaskade aus hintereinander geschalteten Reaktoren durchgeführt, in denen das pulverförmige Reaktionsbett durch einen vertikalen Rührer in Bewegung gehalten wird, wobei sich sogenannte frei tragende Wendelrührer besonders gut eignen. Derartige Rührer sind u.a. aus der EP-B 000 512 und der EP-B 031 417 bekannt. Sie zeichnen sich insbesondere dadurch aus, dass sie das pulverförmige Reaktionsbett sehr homogen verteilen. Beispiele für solche pulverförmigen Reaktionsbette sind in der EP-B 038 478 beschrieben. Vorzugsweise besteht die Reaktorkaskade aus zwei hintereinander geschalteten, kesselförmigen, mit einem Rührer versehenen Reaktoren mit einem Rauminhalt von 0,1 bis 100 m³, beispielsweise 12,5, 25, 50 oder 75 m³.

Nach dem erfindungsgemäßen Verfahren zur Dosierung von Katalysatoren in Reaktoren suspendiert man zunächst den Katalysator, beispielsweise die titanhaltige Feststoffkomponente im Falle von Ziegler-Natta-Katalysatoren bzw. die Metallocenverbindung im Falle von Metallocen-Katalysatoren, in einem Vorlagebehälter in einem Kohlenwasserstoff. Geeignete Vorlagebehälter sind u.a. mit einem Rührer versehene Rührbehälter. Als Kohlenwasserstoffe können insbesondere aliphatische, aromatische oder aber olefinische C₃-C₃₀-Kohlenwasserstoffe oder Mischungen aus diesen verwendet werden. Besonders geeignete Kohlenwasserstoffe sind u.a. Hexan, Heptan, Isodecan oder Weißöl bzw. Benzol, Toluol oder aber Ethylbenzol, ferner u.a. lineare oder verzweigte C₂-C₂₀-α-Olefine wie z.B. But-1-en, Pent-1-en, Propylen oder Hexen. Ein besondes geeignetes Suspensionsmittel ist u.a. Weißöl, ein flüssiges Gemisch gesättigter, aliphatischer Kohlenwasserstoffe.

Die dadurch erhaltene Suspension wird durch geeignete Rührer, beispielsweise durch Anker- oder aber durch Flügelrührer in Bewegung gehalten. Besonders geeignete Rührer sind u.a. Viscoprop Rührer der Firma Ekato. Die Drehzahl des eingesetzten Rührers beträgt üblicherweise 5 bis 300 Umdrehungen pro Minute, insbesondere 10 bis 150 Umdrehungen pro Minute.

Aus dem Behälter wird die den Katalysator enthaltende Suspension über eine geeignete Pumpe aus dem Vorlagebehälter ausgetragen und in der Weise kontinuierlich umgewälzt, dass man die Suspension über das Dreiwegedosierventil innerhalb eines geschlossenen Leistungssystems in den Vorlagebehälter zurückführt. Hierfür geeignete Pumpen sind u.a. Verdrängungspumpen oder aber Membranpumpen. Besonders gut eignen sich hierbei u.a. Cerex Membranpumpen der Firma Bran & Luebbe in Norderstedt. Es empfiehlt sich, das Volumen des Vorlagebehälters innerhalb einer Stunde 0,1 bis 5 mal, vorzugsweise 0,5 bis 2 mal umzuwälzen. Vorzugsweise sollte der Umwälzvorgang mit Hilfe eines Massendurchflußmessers überwacht werden. Hierfür können u.a. Massendurchflußmesser mit dem Handelsnamen Promass der Firma Endress & Hausser verwendet werden. Die Dosierung der den Katalysator enthaltenden Suspension erfolgt in der Weise, dass man zunächst über das Dreiwegedosierventil im Vorlagebehälter einen Druck einstellt, der 0,1 bis 30 bar, insbesondere 0,5 bis 15 bar höher liegt als der Druck im Reaktor. Die hierfür eingesetzten Dreiwegedosierventile weisen vorzugsweise nur einen Kegel auf (z.B. Typ 187037-/P, Sonderbauform der Firma Kaemmer).

Im Anschluß daran wird durch einen pulsierenden Betrieb des nunmehr geöffneten Dreiwegedosierventils die Suspension über ein Durchflußmeßgerät, welches das Dreiwegedosierventil steuert und einen nachgeschalteten Ejektor in den Reaktor kontinuierlich eingebracht. Die Dosierung der den Katalysator enthaltenden Suspension erfolgt durch pulsierenden Betrieb des Dreiwegedosierventils, wobei das Dreiwegedosierventil in Stellung "geöffnet" einen Öffnungsrad von 1 bis 100 %, vorzugsweise von 10 bis 100 % für eine frei wählbare Zeit von bevorzugt 1 bis 600 Sekunden, vorzugsweise von 1 bis 100 Sekunden ansteuert. In Stellung "geschlossen" steuert das Dreiwegedosierventil einen Öffnungsrad von 0 bis 100 %, vorzugsweise von 0 bis 10 % für eine frei wählbare Zeit von bevorzugt 1 bis 600 Sekunden, insbesondere von 1 bis 100 Sekunden an.

Die so dosierte Menge an Suspension, welche den Katalysator enthält, durchströmt ein Durchflußmeßgerät, vorzugsweise das Gerät "Promass" der Firma Endress & Hausser, zur Kontrolle der Katalysatordosierung. Mit Hilfe des Ausgangssignals des Durchflußmeßgerätes ist es möglich, das Dreiwegedosierventil zu steuern und so die Dosierung des Katalysators als sogenannte "closed loop" Regelung aufzubauen. Die den Katalysator enthaltende Suspension wird zuletzt über einen Ejektor in den Reaktor befördert. Hierbei kann es sich empfehlen, den Ejektor mit einem aliphatischen oder einem olefinischen Kohlenwasserstoff, beispielsweise mit Propylen anzuströmen.

Im Anschluß daran werden zunächst in den Reaktor die Cokatalysatoren, beispielsweise die Aluminiumverbindung b) und die Elektronendonorverbindungen c) im Falle von Ziegler-Natta-Katalysatoren, bzw. die bei Metallocen-Katalysatoren eingesetzten Cokatalysatoren, u.a Triethylaluminium oder aber Triisobutylaluminium eindosiert und nach Zugabe der entsprechenden Monomeren erfolgt dann die eigentliche chemische Umsetzung, beispielsweise die Polymerisation der C₂-C₂₀-Olefine.

Die Polymerisation kann unter üblichen Reaktionsbedingungen vorzugsweise bei Temperaturen von 40 bis 150°C und Drücken von 1 bis 100 bar vorgenommen werden. Bevorzugt sind Temperaturen von 40 bis 120°C, insbesondere von 60 bis 100°C und Drücke von 10 bis 50 bar, insbesondere von 15 bis 40 bar. Die Molmasse der gebildeten Polymerisate der C₂-C₂₀-Olefine kann durch die Zugabe von in der Polymerisationstechnik üblichen Reglern, beispielsweise von Wasserstoff, kontrolliert und eingestellt werden. Neben Reglern können auch sogenannte Regulatoren, d.h. Verbindungen, die die Katalysatoraktivität beeinflussen, oder auch Antistatika eingesetzt werden. Letztere verhindern die Belagbildung an der Reaktorwand durch elektrostatische Aufladung. Die Polymerisate der C₂-C₂₀-Olefine weisen in der Regel eine Schmelze-Fließrate (MFR) von 0,1 bis 4000 g/10 min., insbesondere von 0,2 bis 200 g/10 min, bei 230°C und unter einem Gewicht von 2,16 kg, auf. Die Schmelze-Fließrate entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird. Besonders bevorzugt sind dabei solche Polymerisate, deren Schmelze-Fließrate 2 bis 80 g/10 min, bei 230°C und unter einem Gewicht von 2,16 kg, beträgt.

Beim erfindungsgemäßen Verfahren liegen die mittleren Verweilzeiten in üblichen Zeiträumen. Bei der Polymerisation der C₂-C₂₀-Olefine sind die Verweilzeiten im Bereich von 0,1 bis 10 Stunden, bevorzugt im Bereich von 0,2 bis 5 Stunden und insbesondere im Bereich von 0,3 bis 4 Stunden zu finden.

Die ebenfalls erfindungsgemäße Vorrichtung zum Dosieren von Katalysatoren ist in der nachstehenden Figur I aufgeführt. Die Vorrichtung besteht vorzugsweise aus einem Vorlagebehälter (1) in welchem der Katalysator in einem Kohlenwasserstoff suspendiert ist, und welcher mit einem geeigneten Rührer versehen ist, ein sich daran anschließendes Leitungssystem mit einer Pumpe (2), mit welchem der Inhalt des Vorlagebehälters umgewälzt wird und einem daran angeschlossenen Dreiwegedosierventil (4), welches über ein weiteres Leitungssystem, das ein Durchflußmessgerät (5) aufweist, mit einem Ejektor (6) verbunden ist, über den die den Katalysator aufweisende Suspension beispielsweise mittels Propylen in den Reaktor (7) eingespeist wird.

Dabei kann es sich empfehlen, daß das Leitungssystem in der erfindungsgemäßen Vorrichtung, welche den Inhalt des Vorlagebehälters umwälzt, noch einen Massendurchflußmesser (3) aufweist.

Mit Hilfe des erfindungsgemäßen Verfahrens und der ebenfalls erfindungsgemäßen Vorrichtung ist es möglich, Katalysatoren beispielsweise zur Polymerisation von C₂-C₂₀-Olefinen kontinuierlich und sehr homogen in einen Reaktor einzubringen, wobei praktisch keine störenden Verunreinigungen mitgeschleppt werden und wobei ferner die dosierte Katalysatormenge meßbar ist. Das erfindungsgemäße Verfahren zeichnet sich ferner durch eine hohe Betriebssicherheit und eine lange Betriebsdauer aus.

Mittels des erfindungsgemäßen Verfahrens bzw. der erfindungsgemäßen Vorrichtung können u.a. verschiedene Arten von Katalysatoren für die Polymerisation von C₂-C₂₀-Olefinen in Reaktoren dosiert werden. Die dabei erhaltenen Homopolymerisate, Copolymerisate oder Gemische aus derartigen Polymerisaten eignen sich vor allem zur Herstellung von Folien, Fasern oder Formkörpern.

### Beispiele

Bei den Versuchen der Beispiele 1, 2, 3 und 5 sowie den Vergleichsbeispielen A bis C und E wurde ein Ziegler-Natta-Katalysatorsystem eingesetzt, das eine nach folgendem Verfahren hergestellte titanhaltige Feststoffkomponente a) enthielt.

In einer ersten Stufe wurde ein feinteiliges Kieselgel, das einen mittleren Teilchendurchmesser von 30 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente a) enthielt
3,5 Gew.-% Ti
7,4 Gew.-% Mg
28,2 Gew.-% Cl.

Neben der titanhaltigen Feststoffkomponente a) wurden als Cokatalysatoren Triethylaluminium und organische Silanverbindungen analog der Lehre der US-A 4 857 613 und der US-A 5 288 824 verwendet.

### Beispiel 1

In einem 100 l Rührbehälter wurde eine 15 Gew.-% Suspension der titanhaltigen Feststoffkomponente a) in Weißöl (Winog 70) eingefüllt. Über die angeschlossene Pumpe wurde diese Suspension in einer Menge von 100 kg pro Stunde umgewälzt. Das angeschlossene Dreiwegedosierventil wurde mit einer Öffnungszeit von 4 Sekunden bei 45 % und einer Verschlußzeit von 1 Sekunde bei 0 % betrieben.

Die so dosierte Suspensionsmenge wurde über ein Durchflußmeßgerät und über ein Ejektorstück mit Propylen in einer Menge von 240 kg/h in einen kontinuierlich betriebenen 12,5 m³ Polymerisationsreaktor gefördert. Dabei wurde im Rührbehälter ein Druck angelegt, der 8,5 bar höher lag wie der im Polymerisationsreaktor.

In den Polymerisationsreaktor wurden zusätzlich 0,3 kg Triethylaluminium pro Tonne frisch Propylen (0,3 kg/t frisch Propylen) und 0,1 kg Isobutyl-isopropyl-dimethoxysilan pro Tonne frisch Propylen sowie Wasserstoff in einer Menge von 110 g pro Tonne frisch Propylen als Molmassenregler in den Reaktor dosiert. Im Anschluß daran wurden Propylen und Ethylen unter den in Tabelle I angegebenen Bedingungen, d.h. Temperatur und Druck, bei einer durchschnittlichen Verweilzeit von 1,8 Stunden polymerisiert. Die Kornverteilung des erhaltenen Propylen-Ethylen-Copolymerisats ist in der nachstehenden Tabelle I aufgeführt, ebenso wie die Standardabweichungen der Parameter Druck und Temperatur.

### Beispiel 2

Es wurde verfahren wie in Beispiel 1 mit dem Unterschied, daß bei höherem Druck und höherer Temperatur gefahren wurde.

### Vergleichsbeispiel A

In einem 100 l Rührbehälter wurde eine 15 Gew.-% Suspension der titanhaltigen Feststoffkomponente in Weißöl (Winog70) eingefüllt. Über einen, am unteren Auslauf des Behälters installierten Double Check Feeder wurde der Katalysator mit einer Pausenzeit von 80 Sekunden (Stellung geschlossen) und einer Dosierzeit von 3 Sekunden (Stellung auf Dosierung) nach unten gefördert und mittels 240 kg/h Propylen in den Reaktor gefördert. Die Polymerisationsbedingungen entsprechen Beispiel 1. Anhand der Daten aus Tabelle I wird ersichtlich, daß die Reaktionsparameter (vgl. Standardabweichungen) deutlich stärker schwanken und die Polymermorphologie deutlich grober ist.

### Vergleichsbeispiel B

Es wurde analog wie in Vergleichsbeispiel A gearbeitet, mit dem Unterschied, daß bei 28 bar und 77°C polymerisiert wurde. Innerhalb von drei Stunden wurde die Teilchenmorphologie sehr grob (mehr als 5 % Teilchen >4 mm) so daß der Versuch abgebrochen werden musste.

### Beispiel 3

Es wurde polymerisiert wie in Beispiel 1, jedoch ohne Ethylen zu dosieren.

### Vergleichsbeispiel C

Es wurde polymerisiert wie in Vergleichsbeispiel 1, jedoch ohne Ethylen zu dosieren und mit geänderten Parametern hinsichtlich Druck und Temperatur. Auch bei diesem Versuch zeigt sich, daß mit der konventionellen Fahrweise deutlich größere Schwankungen im Prozeß festzustellen sind.

### Beispiel 4

Das erfindungsgemäße Beispiel 1 wurde analog wiederholt, mit dem Unterschied, daß anstelle der titanhaltigen Feststoffkomponente a) ein mit Kieselgel geträgerter Metallocenkatalysator des Typs rac-Dimethylsilandiyl-bis(2-methyl-benzo[e]indenyl)zirkondichlorid verwendet wurde und auf die Dosierung des organischen Silans verzichtet wurde. Außerdem wurde Isopropanol in einer Menge von 20 g/pro Tonne frisch Propylen zudosiert.

### Vergleichsbeispiel D

Es wurde verfahren wie in Vergleichsbeispiel A mit dem Unterschied, daß der Metallocenkatalysator von Beispiel 4 eingesetzt wurde und auf die Dosierung des Silans verzichtet wurde. Wasserstoff wurde in einer Menge von 20 g/pro Tonne frisch Propylen zudosiert. Es wurde nur Propylen polymerisiert, Das erhaltene Propylenpolymerisat zeigte erhöhte Anteile an groben Partikeln in der Siebanlage (Kornverteilung >4 mm).

### Vergleichsbeispiel E

In einem 100 l Rührbehälter wurde eine 15 Gew.-% Suspension der titanhaltigen Feststoffkomponente a) in Weißöl (Winog 70) eingefüllt. Über ein am unteren Auslauf des Rührbehälters installiertes Ventil wurde die den Katalysator enthaltende Suspension ohne vorherigen Umwälzvorgang mit einer Pausenzeit von 2 Sekunden bei Stellung 0 % und einer Dosierzeit von 10 Sekunden bei Stellung 90 % nach unten gefördert. Dort wurde analog dem Beispiel 1 ein Gemisch aus Propylen und Ethylen bei gleichen Bedingungen polymerisiert. Nachdem das Ventil bereits nach weniger als 10 Minuten verstopft war und gereinigt werden mußte, wurde der Versuch abgebrochen.

### Beispiel 5

Das Beispiel 3 wurde unter analogen Bedingungen wiederholt, wobei der Katalysator anstelle von Weißöl in Propylen suspendiert wurde.

In der nachfolgenden Tabelle I sind für die erfindungsgemäßen Beispiele 1, 2, 3, 4 und 5 sowie für die Vergleichsbeispiele A, C und D der jeweilige Druck, die jeweilige Temperatur und die eingesetzten Monomermengen bei der Polymerisation angegeben. Die Tabelle enthält ferner die jeweiligen Standardabweichungen von Druck und Temperatur sowie die Kornverteilung der erhaltenen Polymerisate, ermittelt durch Siebanalyse.

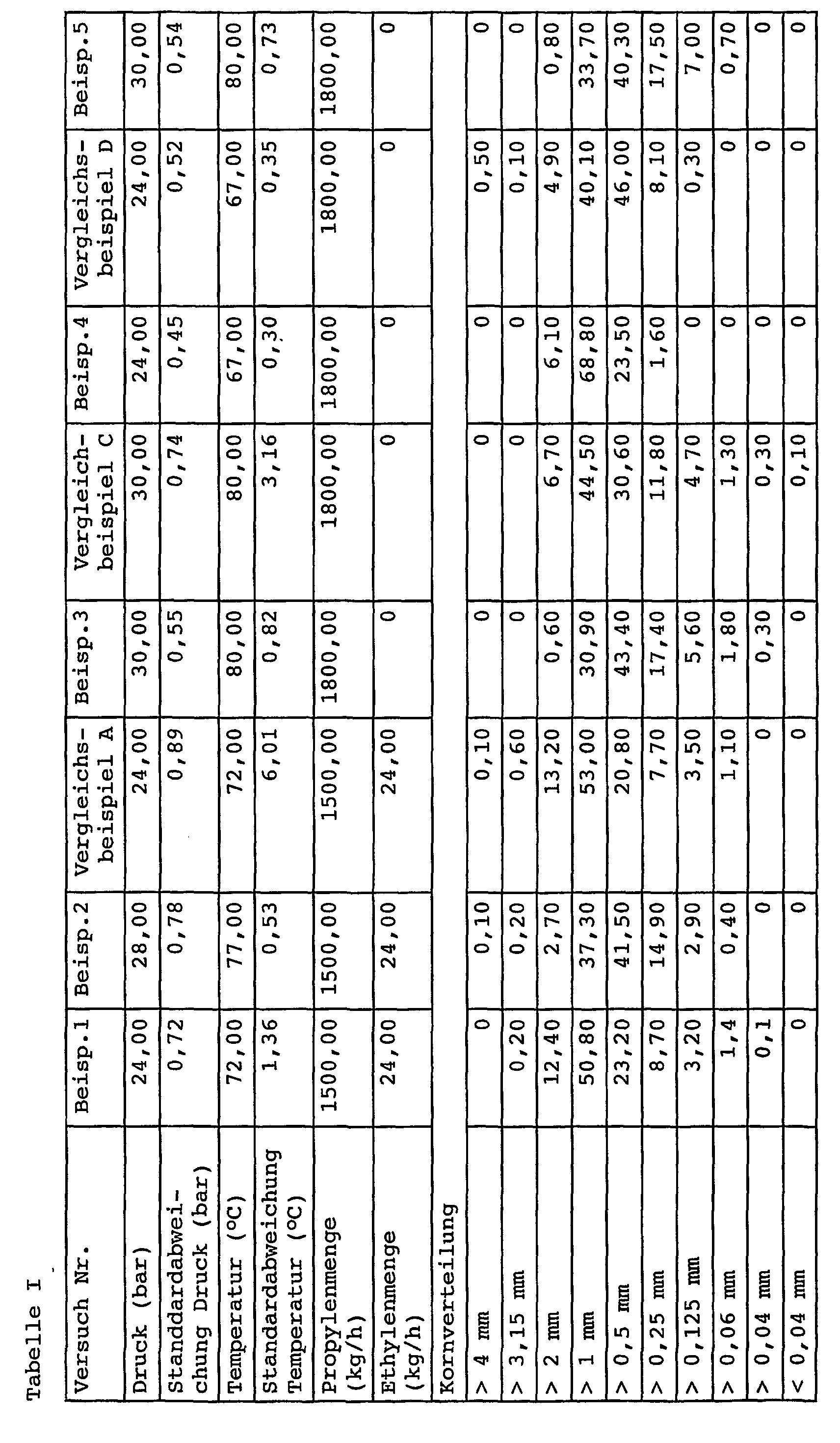

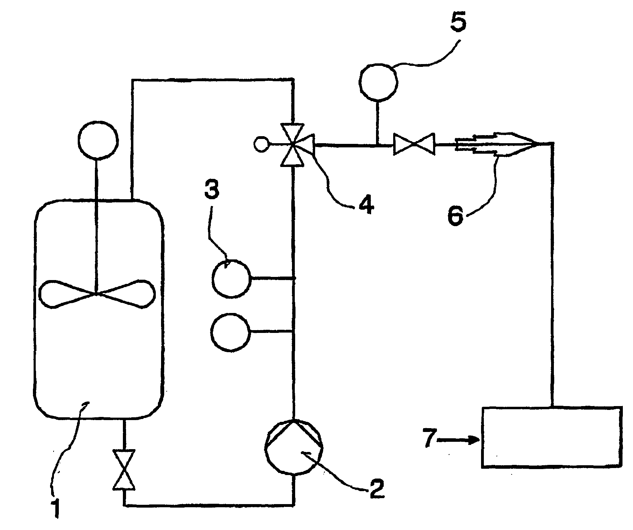

## Patentansprüche

1. Verfahren zur Dosierung von Katalysatoren in einen Reaktor, wobei man zunächst den Katalysator in einem Vorlagebehälter in einem Kohlenwasserstoff suspendiert, die erhaltene Suspension durch Rühren in Bewegung hält und diese dann über ein Dreiwegedosierventil und einen Ejektor in den eigentlichen Reaktor einspeist, **dadurch gekennzeichnet, dass** man zuerst die den Katalysator enthaltende Suspension mit Hilfe einer Pumpe aus dem Vorlagebehälter austrägt und dadurch kontinuierlich umwälzt, dass man die Suspension über das Dreiwegedosierventil innerhalb eines geschlossenen Leitungssystems in den Vorlagebehälter zurückführt, anschließend innerhalb des vorlagebehälters einen Druck einstellt, der 0,1 bis 30 bar höher liegt als der Druck im Reaktor und danach durch einen pulsierenden Betrieb des nunmehr geöffneten Dreiwegedosierventils die Suspension über ein Durchflußmeßgerät, welches das Dreiwegedosierventil steuert und einen nachgeschalteten Ejektor in den Reaktor kontinuierlich einbringt.

2. Verfahren nach Anspruch 1, **dadurch gekennzeichnet, dass** der Inhalt des gesamten Vorlagebehälters mit Hilfe einer Pumpe innerhalb einer Stunde 0,1 bis 5 mal umgewälzt wird.

3. Verfahren nach den Ansprüchen 1 oder 2, **dadurch gekennzeichnet, dass** der Inhalt des gesamten Vorlagebehälters in der Weise umgewälzt wird, dass dieser Vorgang mit Hilfe eines Massendurchflußmessers überwacht wird.

4. Verfahren nach den Ansprüchen 1 bis 3, **dadurch gekennzeichnet, dass** innerhalb des Vorlagebehälters ein Druck eingestellt wird, der 0,5 bis 15 bar höher liegt als der Druck im Reaktor.

5. Verfahren nach den Ansprüchen 1 bis 4, **dadurch gekennzeichnet, dass** man den Ejektor mit Propylen kontinuierlich anströmt.

6. Verfahren nach den Ansprüchen 1 bis 5, **dadurch gekennzeichnet, dass** mit dem Verfahren Ziegler-Natta-Katalysatoren auf der Basis einer titanhaltigen Feststoffkomponente in den Reaktor eindosiert werden.

7. Verfahren nach den Ansprüchen 1 bis 6, **dadurch gekennzeichnet, dass** mit dem Verfahren Katalysatoren auf der Basis von Metallkomplexen in den Reaktor eingespeist werden.

8. verfahren nach den Ansprüchen 1 bis 7, **dadurch gekennzeichnet, daß** es zur Dosierung von Katalysatoren zur Polymerisation von C₂-C₂₀-Olefinen verwendet wird.

9. Verfahren nach den Ansprüchen 1 bis 8, **dadurch gekennzeichnet, daß** es zur Dosierung von Katalysatoren zur Polymerisation von aliphatischen C₂-C₁₀-Alk-1-enen verwendet wird.

10. Verfahren nach den Ansprüchen 1 bis 9, dadurch gekennzeichent, daß der Katalysator in einem linearen oder verzweigten C₂-C₂₀-α-Olefin suspendiert wird.

11. Verfahren nach den Ansprüchen 1 bis 10, **dadurch gekennzeichnet, daß** der Katalysator in Propylen suspendiert wird.

12. Vorrichtung zur Dosierung von Katalysatoren in einen Reaktor, bestehend aus einem Vorlagebehälter, in welchem der Katalysator in einem Kohlenwasserstoff suspendiert ist und welcher mit einem geeigneten Rührer versehen ist, ein sich daran anschließendes Leitungssystem mit einer Pumpe, mit welchem der Inhalt des Vorlagebehälters umgewälzt wird und einem daran angeschlossenen Dreiwegedosierventil, welches über ein weiteres Leitungssystem, das ein Durchflußmessgerät aufweist, mit einem Ejektor verbunden ist, über den die den Katalysator aufweisende Suspension in den Reaktor eingespeist wird, wobei das Leitungssystem, welches den Inhalt des Vorlagebehälters umwälzt, einen Massendurchflußmesser aufweist.

## Claims

1. A method of metering catalysts into a reactor, where the catalyst is firstly suspended in a hydrocarbon in a reservoir and the suspension obtained is kept in motion by stirring and then fed via a three-way metering valve and an ejector into the actual reactor, wherein the suspension containing the catalyst is firstly discharged from the reservoir by means of a pump and continuously circulated by returning the suspension via the three-way metering valve within a closed piping system to the reservoir, subsequently setting a pressure in the reservoir which is from 0.1 to 30 bar higher than the pressure in the reactor and then continuously introducing the suspension into the reactor via a flow meter which controls the three-way metering valve and via a downstream ejector by pulse operation of the now open three-way metering valve.

2. A method as claimed in claim 1, wherein the contents of the entire reservoir are circulated from 0.1 to 5 times per hour by means of a pump.

3. A method as claimed in claim 1 or 2, wherein the circulation of the contents of the entire reservoir is monitored by means of a mass flow meter.

4. A method as claimed in any of claims 1 to 3, wherein the pressure set in the reservoir is from 0.5 to 15 bar higher than the pressure in the reactor.

5. A method as claimed in any of claims 1 to 4, wherein propylene is conveyed continuously into the ejector.

6. A method as claimed in any of claims 1 to 5 by means of which Ziegler-Natta catalysts based on a titanium-containing solid component are metered into the reactor.

7. A method as claimed in any of claims 1 to 6 by means of which catalysts based on metal complexes are fed into the reactor.

8. A method as claimed in any of claims 1 to 7 used for metering catalysts for the polymerization of C₂-C₂₀-olefins.

9. A method as claimed in any of claims 1 to 8 used for metering catalysts for the polymerization of aliphatic C₂-C₁₀-alk-1-enes.

10. A method as claimed in any of claims 1 to 9, wherein the catalyst is suspended in a linear or branched C₂-C₂₀-α-olefin.

11. A method as claimed in any of claims 1 to 10, wherein the catalyst is suspended in propylene.

12. An apparatus for metering catalysts into a reactor, comprising a reservoir in which the catalyst is suspended in a hydrocarbon and which is provided with a suitable stirrer and, connected thereto, a piping system provided with a pump by means of which the contents of the reservoir are circulated and a three-way metering valve which is connected via a further piping system provided with a flow meter to an ejector via which the suspension comprising the catalyst is fed into the reactor, wherein the piping system which circulates the contents of the reservoir is provided with a mass flow meter.

## Revendications

1. Procédé de dosage de catalyseurs dans un réacteur, où on met d'abord le catalyseur en suspension dans un hydrocarbure, dans un récipient de réserve, la suspension obtenue est maintenue en mouvement par agitation et celle-ci est injectée par une vanne de dosage à trois voies et un éjecteur, dans un réacteur spécifique, **caractérisé en ce que** l'on évacue d'abord la suspension contenant le catalyseur à l'aide d'une pompe depuis le récipient de réserve et on la fait circuler en continu de sorte que l'on ramène la suspension dans le récipient de réserve par la vanne de dosage à trois voies dans un système fermé, ensuite on ajuste une pression dans le récipient de réserve, laquelle pression se situe de 0,1 à 30 bar en plus que la pression dans le réacteur et ensuite, on introduit la suspension dans le réacteur, de manière continue, par un fonctionnement pulsé de la vanne de dosage à trois voies à présent ouverte, au travers d'un appareil de mesure de débit, qui règle la vanne de dosage à trois voies, et un éjecteur suivant.

2. Procédé selon la revendication 1, **caractérisé en ce que** le contenu de tout le récipient de réserve est mis en circulation à l'aide d'une pompe, 0,1 à 5 fois en une heure.

3. Procédé selon la revendication 1 ou 2, **caractérisé en ce que** le contenu de tout le récipient de réserve est mis en circulation de manière que ce processus est surveillé à l'aide d'un appareil de mesure du débit en masse.

4. Procédé selon les revendications 1 à 3, **caractérisé en ce que** dans le récipient de réserve, on ajuste une pression qui est 0,5 à 15 bar supérieure à la pression dans le réacteur.

5. Procédé selon les revendications 1 à 4, **caractérisé en ce que** l'on afflue en continu, l'éjecteur avec du propylène.

6. Procédé selon les revendications 1 à 5, **caractérisé en ce que** l'on dose avec le procédé, des catalyseur de Ziegler-Natta à base d'un composant solide contenant du titane dans le réacteur.

7. Procédé selon les revendications 1 à 6, **caractérisé en ce que** l'on injecte avec le procédé, des catalyseurs à base de complexes métalliques dans le réacteur.

8. Procédé selon les revendications 1 à 7, **caractérisé en ce qu'**il est utilisé pour le dosage de catalyseurs pour la polymérisation d'oléfines en C₂-C₂₀.

9. Procédé selon les revendications 1 à 8, **caractérisé en ce qu'**il est utilisé pour le dosage de catalyseurs pour la polymérisation d'alc-1-ènes aliphatiques en C₂-C₁₀.

10. Procédé selon les revendications 1 à 9, **caractérisé en ce que** le catalyseur est mis en suspension dans une α-oléfine en C₂-C₂₀ linéaire ou ramifiée.

11. Procédé selon les revendications 1 à 10, **caractérisé en ce que** le catalyseur est mis en suspension dans le propylène.

12. Dispositif de dosage de catalyseurs dans un réacteur, consistant en un récipient de réserve, dans lequel on met le catalyseur en suspension dans un hydrocarbure, et qui est muni d'un agitateur approprié, un système de circulation s'y raccordant, avec une pompe, qui fait circuler le contenu du récipient de réserve et une vanne de dosage à trois voies y raccordée, qui est reliée à un éjecteur par un autre système de circulation, qui présente un appareil de mesure du débit, éjecteur par lequel la suspension présentant le catalyseur est injectée dans le réacteur, où le système de circulation, qui fait circuler le contenu du récipient de réserve, présente un appareil de mesure du débit en masse.
